# EUROPEAN PATENT SPECIFICATION

(11) **EP 0 716 391 B1**
(45) Date of publication and mention of the grant of the patent: **26.09.2001**
(21) Application number: 95308910.9
(22) Date of filing: 07.12.1995
(51) Int. Cl.: G06K 11/18

(54) **Electrostatic pen apparatus and method**
Gerät und Verfahren für elektrostatischen Stift
Dispositif et méthode pour crayon électrostatique

(30) Priority: 08.12.1994 US 352252
(43) Date of publication of application: 12.06.1996
(73) Proprietor: HYUNDAI ELECTRONICS AMERICA, Milpitas, California 95035 (US)
(72) Inventor: Prater, James, Fort Collins, CO 80524 (US)
(74) Representative: Gill, David Alan

(56) References cited:
- EP-A- 0 615 209
- US-A- 5 357 062

## Description

The present invention relates to an electrostatic stylus or pen apparatus and method, in particular for interactive use with a digitizing tablet input device that is capable of producing signals that are usable by a signal detector such as a computer system.

As is well known in the art of tablet type electrostatic digitizers, the signal that is generated by a signal source is coupled to the tablet by way of a capacitor whose components comprise the conductive pen tip, the tablet's upper insulator coating, and the tablet's lower conductive coating. Most of this capacitance effect is produced by a relatively small area of physical contact of the pen tip to the insulator coating. Generally speaking, the larger this contact area the larger will be the signal that is coupled to the tablet from the pen. With a rigid pen tip this capacitance is determined largely by the geometry of the pen tip, the geometry of the tablet, and the materials used in the pen tip and the tablet.

Graphics pens are known which have a tip or stylus which is electrically conductive. United States patent 4,318,096 is representative of these known features.

The general idea of providing a resilient contact pressure to a tablet is known. Reissue United States patent Re. 34,095 teaches a digitizer stylus having a tablet engaging pen refill of conventional pen refill construction. A pressure responsive transducer includes a movable plunger that is made of resilient material having a rounded surface that is deformed to increase the area of contact to a surface as the stylus pressure increases.

US-A-5 357 062, which represents the basis for the preamble of claim 1, discloses a stylus having a body portion and an electrically conductive nib means extending therefrom where at least a portion of the nib means is formed of a deformable material. However, the location of the deformable material within the modular nib means is disadvantageously restrictive.

While known devices such as those exemplified above are generally useful for their limited intended purposes, disadvantages such as limited capacitor-electrode contact area, limited capacitance and problematic signal to noise ratios remain in such known devices.

The present invention seeks to provide for an electrostatic pen apparatus and method having advantages over known apparatus and methods.

The invention is defined by apparatus claims 1 and 5 and by method claim 6. There is provided a stylus having a body portion and an electrically conductive nib means extending therefrom, wherein at least a portion of said nib means is formed of a deformable material, said nib means is deformable so that the area of contact between said nib means and working surface is a function of the force exerted on the nib means and urging it into contact with a working surface.

The present invention thus advantageously provides a manually operable electrostatic pen having a tapered tip or nib that is both electrically conductive and flexible.

In operation of the invention, a flexible pen tip deforms to increase the area of contact to a dielectric tablet, thus increasing the area of the top plate or electrode of the capacitor that is formed by the pen tip and the tablet.

An additional advantage of the use of a flexible tip is that the material from which the tip is formed can be selected to achieve a desired coefficient of friction between the pen and the tablet, thus improving the feel or tactile feedback of the pen while writing.

A particular feature of the present invention is the provision of an apparatus and method for generating an electrical signal to a signal detector, such as a computer system, from a tablet and a manually movable touch pen that is operable with the tablet. The tablet includes a generally planar insulating layer having an upper surface and a lower surface. The lower surface of the insulating layer closely overlies a conductive layer. A touch pen is provided having a physically deformable, electrically conductive, and tapered tip for engaging the upper surface of the insulating layer. A signal source is provided having a first and a second signal conductor, the first signal conductor being connected to the electrically conductive tip, and the second signal conductor being adapted to be connected to the signal detector. An electrical conductor is connected to the conductive layer, this electrical conductor being adapted to be also connected to the signal detector.

The invention can thus provide for an electrostatic pen to be associated with a tablet and having a tablet engaging tip which is both electrically conductive and deformable, thus providing an increasing tip contact area to the digitizing tablet as the tip of the manually held pen is pressed downward onto the tablet's top insultaing layer. A signal source and signal detector are connected in series between the pen tip and the tablet's lower conductive layer and the increased contact area of the tip increases the capacitance between the tip and the tablet's lower conductive layer thus improving the signal to noise ratio of the detected signal.

As features of the invention the signal source is constructed integral with the pen body, the pen tip is an electrically conductive and deformable felt whose contact area to the upper surface of the insulating layer increases as a function of an increasing manual force pushing the tip down onto the upper surface of the insulating layer, and the electrical signal that is provided to the signal detector has a magnitude that increases as a function of increases in the tip contact area.

The pen or stylus of the present invention advantageously further comprises means for generating an electrical signal and the digitizing tablet may comprise means for receiving said electrical signal.

It will be appreciated that the invention can comprise a stulus comprising signal means for generating an electrical signal and having a compliant tip for radiating said electrical signal.

In the method of the present invention, the signal source can be integral with the pen and can comprise a source of AC voltage having a frequency between approximately 50-150 Khz.

The nib means of the invention may advantageously be formed from a carbon impregnated elastomer. Also, a digitizing tablet may be provided having an insulating layer with an upper surface and a lower surface and wherein the lower surface closely overlays the conductive layer.

The nib means may advantageously comprise carbon impregnated polyethylene, and the signal source can be integral with the pen or stylus.

In accordance with another aspect of the present invention, there is provided a method of delivering an electrical signal from nib means of stylus means to a signal detector comprising physically deforming said nib means by contact with a working surface associated with said detector at the time of delivery of said electrical signal, characterized in that said nib means comprises an electrically conductive elastomer whose contact area to said working surface increases as a function of increasing manual force pushing said nib means onto said working surface and including the step of providing an electrical signal to the signal detector whose magnitude increases as a function of increases in said contact area.

The invention may provide for a method for receiving a variable strength signal by a tablet from a pen that is operable with said tablet and which comprises the steps of receiving a signal of a first signal strength by the tablet when the pen engages the tablet with a first force, and receiving a signal of a second signal strength by the tablet when the pen engages the tablet with a second force.

This method may be such that the second signal strength is greater than the first signal strength when the second force is greater than the first force.

It should be appreciated that the nib means can advantageously comprise a tapered tip formed of any material appropriate to the present invention.

The invention also comprises a pen for use with a dielectric tablet having an upper insulating layer, a lower conductive layer, and an electrical conductor connected to the conductive layer and adapted to connect the conductive layer to a signal detector, the pen comprising a pen body having a lower end, an elastic, physically deformable, and electrically conductive pen tip extending from said lower end, said pen tip being adapted for selectively engaging the tablet's insulating layer with an area of contact that is a function of the force by which said pen body is manually pressed down onto the insulating layer, and a signal source coupled to said pen tip.

The invention is described further hereinafter, by way of example only, with reference to the accompanying drawings in which:
Fig. 1 is a sectional view of a digitizing tablet and a side view of a manually movable pen that are connected to a signal detector, according to an embodiment of the present invention;
Fig. 2 is an alternative embodiment to that shown in Fig. 1, in which the nib of the pen has a metal portion and a flexible portion;
Fig. 3 is a view similar to that of Fig. 1 showing the pen's tapered, electrically conductive, and flexible tip in a no-force engagement to the tablet;
Fig. 4 is a view similar to that of Fig. 3 showing deformation of the pen's tip by the application of a downward manual pressure, to thereby provide an increased contact area to the tablet and increased capacitance between the pen tip and the tablet; and
Fig. 5 is a view similar to that of Fig. 4 showing further deformation of the pen's tip by the application of a downward manual pressure, to thereby provide an increased contact area to the tablet and increased capacitance between the pen tip and the tablet.

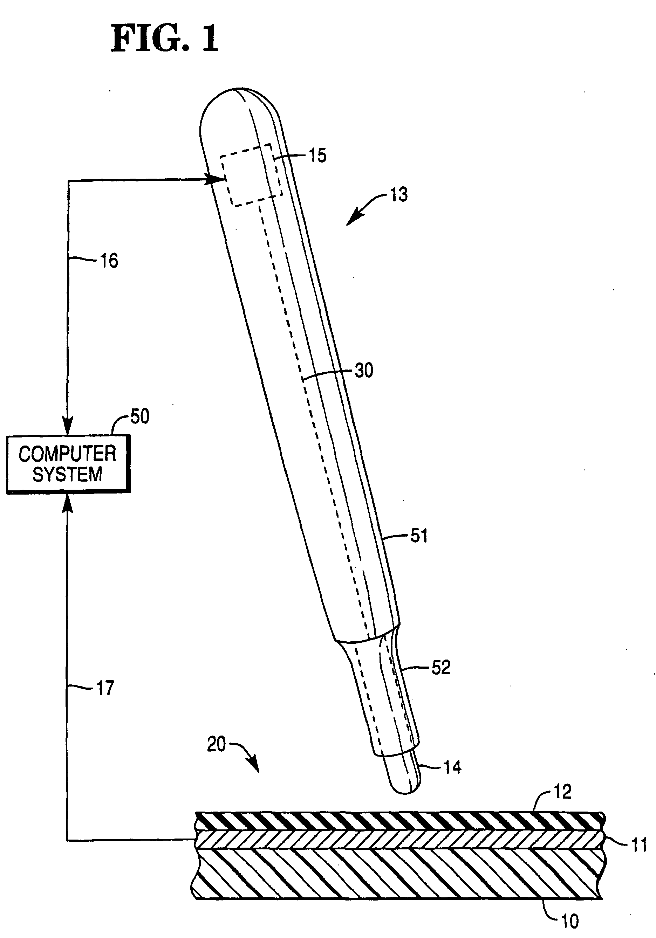

Fig. 1 illustrates a digitizing tablet 20 and a manually movable pen 13 in accordance with an embodiment of the invention.

The tablet 20 defines a flat or planar, and usually horizontal, X-Y pixel coordinate system. The details of construction of the tablet 20 are not critical to the invention and will not be described in any further detail here. It suffices to say that tablet 20 includes a base member 10 that provides structural stability and that exhibits a flat or generally planar upper surface, an electrically conductive coating, layer or member 11 of generally uniform thickness that is supported on the upper surface of base member 10, and an electrically insulating coating, layer or member 12 of generally uniform thickness that is supported on the upper surface of conductive layer 11. Within the spirit and scope of the present invention, the insulating layer 12 can be positioned a small distance above conductive layer 11.

A first output conductor 17 extends from conductive coating 11 to a signal detector, for example a signal detector in the form of computer system 50. Other types of tablets may have an X-Y grid of electrodes or conductors, such as that described in U.S. Patent 4,831,566 to Matthews et al. However, it should be noted that the actual conductor layout within the tablet is not critical to the invention.

The details of construction of the pen 13 in accordance with the invention are also not critical, with the exception that pen tip, stylus or nib 14 that extends downward from the bottom surface of insulating pen body 51 is advantageously formed of an electrically conductive, elastic, and flexible or deformable material. This tip 14 is usually surrounded by a metal or plastic barrel 52 to provide rigidity in the lateral direction, as is commonly done with felt tip ink pens. The overall dimensions of the pen tip are similar to that of conventional digitizing pens or conventional felt tip ink pens. A typical diameter of the pen tip is from 0.3 to 1.0 mm. Wider pen tips are also usable for lower resolution applications, and in those cases the rigid barrel may not be needed since the flexible conductive tip becomes more rigid as its diameter increases. Many conductive elastomers are available for use as the pen tip material. One such material with good electrical and mechanical properties is available under the trade name "Velostat" from the 3M Corporation. Pen tip 14 is connected to a signal source 15 using standard known techniques. Preferably the pen body 51 contains an internal signal source such as is shown at 15. Such internal signal sources are known in the art, as exemplified by U.S. Patent 5,138,118 to Russell. The preferred signal generated by the signal source 51 comprises a sine wave having a frequency of between 50-150 Khz, and an amplitude of 30-100 Volts peak-to-peak.

The signal source 15 is connected to the pen tip 14 by way of an internal electrical conductor 30. A second output conductor 16 extends from the signal source 15 to the computer system 50. In an alternative embodiment, a wireless communication channel is provided in lieu of the second output conductor 16. This channel provides data and status information between the pen and computer system, as further described in the previously cited U.S. patent 5,138,118 to Russell.

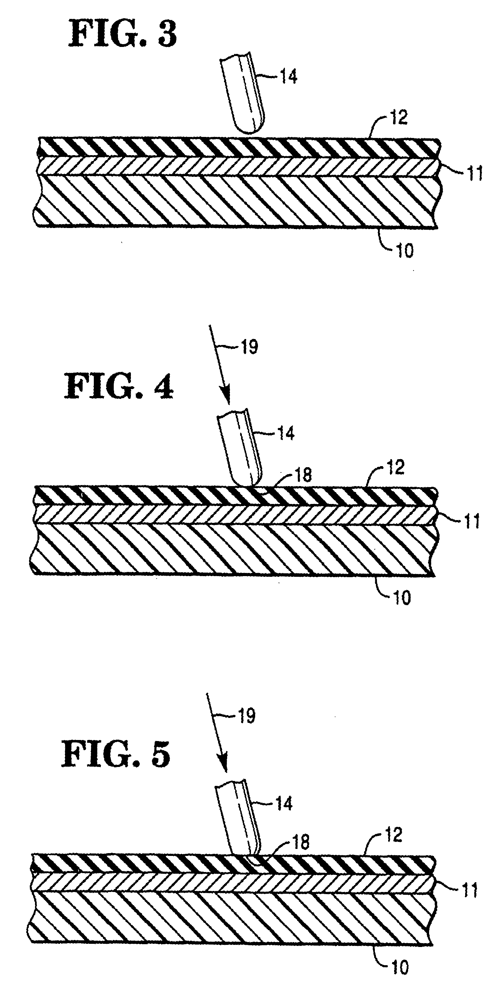

As is well known, the signal that is generated by the pen-contained signal source 15 is coupled to the signal detector 50 by way of a series circuit that includes the capacitor whose components comprise the conductive pen tip 14, the insulator coating 12, and the conductive coating 11. Most of this capacitance 14,12,11 in this series circuit is produced by the small and variable size area 18 of physical contact between the pen tip 14 and the insulator layer 12 (see Fig. 4). Generally speaking, the larger this contact area 18 is, the larger the magnitude of the output signal 16,17 will be and which is coupled from the tablet 20 and the pen 13 to the associated computer system 50. When a rigid pen tip is provided in accordance with the prior art, the magnitude of this capacitance is determined largely by the geometry of the pen tip, the geometry of the tablet, and the materials used in the pen tip and the tablet.

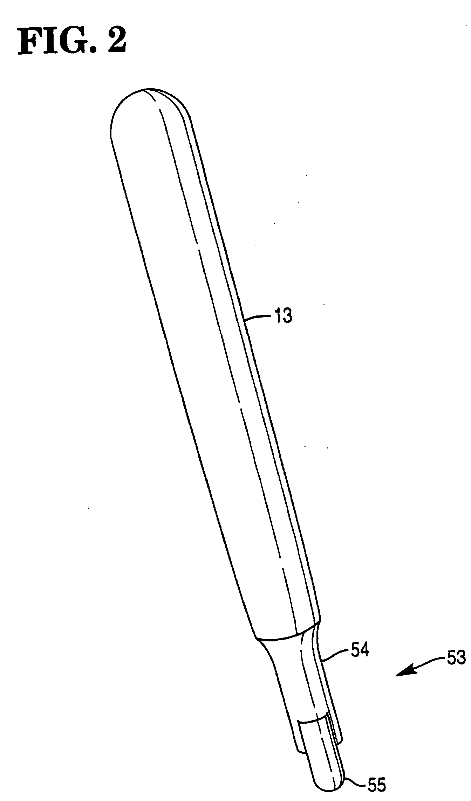

Fig. 2 shows an alternative embodiment to that of Fig. 1. Instead of having a rigid barrel which surrounds and supports a flexible tip or nib 14, as shown in Fig. 1, a tip or nib 53 that comprises a metal or rigid portion 54 and a flexible portion 55 is provided. The flexible portion is made of the same material as element 14 of Fig. 1, but instead of being the entire nib/tip structure the flexible portion is affixed at the end of the nib 53, and hence only comprises a portion of the tip/nib 53. The other, rigid portion 54 is made of metal, and provides a structural member for attaching the flexible portion 54 to the pen/stylus body 13.

Fig. 3 is a side view similar to Fig. 1 showing the pen's flexible tip 14 in a no-force, or minimal force, physical engagement to the upper surface of the tablet's top insulating layer 12. In this position of pen 13 the capacitance value of capacitor 14,12,10 is very low and the signal 16,17 that is provided to computer system 50 is of relatively low signal strength, thus having a low signal-to-noise ratio. This low signal-to-noise ratio results from the fact that a significant amount of ambient noise is 'picked-up' or received by the tablet 20, whose conductive layer 11 essentially acts as an antenna. It is thus difficult to discern the signals 16,17 from this ambient noise.

Fig. 4 is a side view similar to Fig. 3 showing deformation of the pen's felt tip 14 by the application of a downward manual force or pressure 19, to thereby provide an increased contact area 18 to tablet 20, and thereby increased capacitance between pen tip 14 and tablet 20. In this Fig. 4, the position of the pen 13, the capacitance value of capacitor 14,12,10 is much higher than that of Fig. 3, and therefore the signal 16,17 that is provided to computer system 50 is operable to provide a relatively higher magnitude pen position signal to signal detector 50. Thus, this signal has a higher signal-to-noise ratio than that of the signal generated by the pen position shown in Figure 3. Fig. 5 provides an even higher signal-to-noise ratio than that of Fig. 4.

From the above description it can be seen that the invention provides an apparatus and a method for generating an electrical signal for delivery to a detector 50 from a tablet 20 and manually movable touch pen 13, wherein the tablet 20 has an insulating layer 12 with an upper surface and a lower surface, the lower surface closely overlaying a conductive layer 11. The touch pen 13 has a physically deformable, electrically conductive, and tapered tip, preferably formed of an electrically conductive elastomer, that is adapted to physically contact the top surface of insulating layer 12. A signal source 15, which is preferably integral with pen 13, has a first conductor or wireless channel 16 and a second conductor 30. The second conductor 30 is connected to the electrically conductive tip 14, and the first conductor/channel 16 is adapted to be coupled to the signal detector computer system 50. An electrical conductor 17 is connected between the tablet's conductive layer 11 and the signal detector 50. The tip 14 can deform under variable magnitude force in the direction of arrow 19 to provide a variable size contact area 18 to the upper surface of insulating layer 12, this area increasing as a function of an increasing manual force in the direction of arrow 19 pushing the tip 14 onto the upper surface of insulating layer 12. The signal that is provided to the signal detector 50 increases in magnitude as a function of an increases in contact area 18 and the resulting increase in the capacitance value of capacitor 14,12,11 and other factors affecting capacitance are not as critical as previously experienced.

While the invention has been described while making reference to embodiments thereof, those skilled in the art will readily visualize other embodiments of the invention and so the forgoing detailed description is not to be taken as a limitation on the scope of the present invention.

## Claims

1. A stylus having a body portion (13, 51) and an electrically conductive nib means (14, 53) extending therefrom, wherein at least a portion (14, 55) of said nib means (14, 53) is formed of a deformable material, and **characterized in that** said nib means (14, 53) is deformable so that the area of contact between said nib means (14, 53) and a working surface (12) is a function of the force exerted on the nib means (14, 53) and urging it into contact with the working surface (12).

2. A stylus as claimed in Claim 1, further comprising a rigid barrel (52) that partially surrounds said nib means (14).

3. A stylus as claimed in Claim 1, wherein said nib means (53) comprises a rigid portion (54) and a deformable portion (55).

4. Digitizing apparatus comprising a digitizing tablet (20) and **characterized by** a stylus as claimed in any one of Claims 1, 2, or 3.

5. Write capture apparatus comprising a signal detector (50), a tablet (20) having a base member (10) including a generally planar upper surface, a generally uniform thickness conductive coating (11) overlaying said upper surface, and a generally uniform thickness insulating layer (12) overlaying said conductive coating (11), a pen (13) having a pen body (51) and a physically deformable and electrically conductive lower tip (14, 55) extending from said pen body (51) for engaging said insulating layer (12) with an area of contact that is a function of the force by which said pen body (51) is manually pressed down onto said insulating layer (12) and a signal source (15) coupled to said electrically conductive tip (14, 55).

6. A method of delivering an electrical signal from nib means (14, 55) of stylus means to a signal detector (50) comprising physically deforming said nib means (14, 55) by contact with a working surface (12) associated with said detector (50) at the time of delivery of said electrical signal, **characterized by** providing said nib means (14, 55) with an electrically conductive elastomer whose contact area to said working surface (12) increases as a function of increasing manual force pushing said nib means (14, 55) onto said working surface and including the step of providing an electrical signal to the signal detector whose magnitude increases as a function of increases in said contact area.

7. A method as claimed in Claim 6, further comprising the steps of providing said signal source as an alternating current source having a frequency of between approximately 50-150 KHz.

## Patentansprüche

1. Pen mit einem Körperabschnitt (13, 51) und einer sich davon erstreckenden elektrisch leitenden Spitze (14, 53), wobei wenigstens ein Abschnitt (14, 55) der genannten Spitze (14, 53) aus einem verformbaren Material gebildet ist, **dadurch gekennzeichnet, dass** die genannte Spitze (14, 53) so verformbar ist, dass der Kontaktbereich zwischen der genannten Spitze (14, 53) und einer Arbeitsfläche (12) von der auf die Spitze (14, 53) ausgeübten Kraft abhängig ist, um diese mit der Arbeitsfläche (12) in Kontakt zu bringen.

2. Pen nach Anspruch 1, ferner umfassend eine starre Walze (52), die die genannte Spitze (14) teilweise umgibt.

3. Pen nach Anspruch 1, bei der die genannte Spitze (53) einen starren Abschnitt (54) und einen verformbaren Abschnitt (55) umfasst.

4. Digitalisiervorrichtung, umfassend ein Digitalisiertablett (20), **gekennzeichnet durch** einen Pen nach einem der Ansprüche 1, 2 und 3.

5. Schriftfesthaltevorrichtung, umfassend einen Signaldetektor (50), ein Tablett (20) mit einem Basiselement (10), das eine allgemein ebene Oberfläche aufweist, wobei die genannte Oberfläche mit einem leitenden Überzug (11) mit allgemein gleichförmiger Dicke bedeckt ist, wobei auf dem genannten leitenden Überzug (11) eine Isolierschicht (12) mit allgemein gleichförmiger Dicke liegt, wobei ein Pen (13) mit einem Penkörper (51) und einer physikalisch verformbaren und elektrisch leitenden unteren Spitze (14, 55) von dem genannten Penkörper (51) verläuft, um die genannte Isolierschicht (12) mit einem Kontaktbereich in Abhängigkeit von der Kraft zusammen zu bringen, mit der der genannte Penkörper (51) mit der Hand nach unten auf die genannte Isolierschicht (12) gedrückt wird, und wobei eine Signalquelle (15) mit der genannten elektrisch leitenden Spitze (14, 55) gekoppelt ist.

6. Verfahren zum Anlegen eines elektrischen Signals von einer Spitze (14, 55) eines Pens an einen Signaldetektor (50), umfassend das physikalische Verformen der genannten Spitze (14, 55) durch einen Kontakt mit einer Arbeitsfläche (12) in Verbindung mit dem genannten Detektor (50) zum Zeitpunkt des Anlegens des genannten elektrischen Signals, **dadurch gekennzeichnet, dass** die genannte Spitze (14, 55) mit einem elektrisch leitenden Elastomer versehen wird, dessen Kontaktbereich mit der genannten Arbeitsfläche (12) in Abhängigkeit von der Erhöhung einer manuellen Kraft zunimmt, die die genannte Spitze (14, 55) auf die genannte Arbeitsfläche drückt, wobei das Verfahren den Schritt des Anlegens eines elektrischen Signals an den Signaldetektor beinhaltet, dessen Größe in Abhängigkeit von Vergrößerungen in dem genannten Kontaktbereich zunimmt.

7. Verfahren nach Anspruch 6, ferner umfassend die Schritte des Bereitstellens der genannten Signalquelle als Wechselstromquelle mit einer Frequenz zwischen etwa 50 und 150 KHz.

## Revendications

1. Stylet ayant une partie de corps (13, 51) et un moyen de pointe électriquement conductrice (14, 53) s'étendant de celui-ci, dans lequel au moins une partie (14, 55) dudit moyen de pointe (14, 53) est formée en un matériau déformable, et **caractérisé en ce que** ledit moyen de pointe (14, 53) est déformable de sorte que la surface de contact entre ledit moyen de pointe (14, 53) et une surface utile (12) est une fonction de la force exercée sur ledit moyen de pointe (14, 53) et l'incitant en contact avec la surface utile (12).

2. Stylet tel que revendiqué dans la revendication 1, comprenant en outre un cylindre rigide (52) qui entoure partiellement ledit moyen de pointe (14).

3. Stylet tel que revendiqué dans la revendication 1, dans lequel ledit moyen de pointe (53) comprend une partie rigide (54) et une partie déformable (55).

4. Appareil à digitaliser comprenant une tablette à digitaliser (20) et **caractérisé par** un stylet tel que revendiqué dans l'une quelconque des revendications 1, 2, ou 3.

5. Appareil de saisie d'écriture comprenant un détecteur de signal (50), une tablette (20) ayant un membre de base (10) incluant une surface supérieure généralement plane, un revêtement conducteur d'épaisseur généralement uniforme (11) recouvrant ladite surface supérieure, et une couche isolante d'épaisseur généralement uniforme (12) recouvrant ledit revêtement conducteur (11), un stylo (13) ayant un corps de stylo (51) et une pointe inférieure physiquement déformable et électriquement conductrice (14, 55) s'étendant dudit corps de stylo (51) pour engager ladite couche isolante (12) avec une surface de contact qui est une fonction de la force avec laquelle ledit corps de stylo (51) est appuyé manuellement sur ladite couche isolante (12) et une source de signal (15) couplée à ladite pointe électriquement conductrice (14, 55).

6. Méthode pour fournir un signal électrique provenant d'un moyen de pointe (14, 55) d'un moyen de stylet à un détecteur de signal (50) comprenant déformer physiquement ledit moyen de pointe (14, 55) en contact avec une surface utile (12) associée audit détecteur (50) au moment de fournir ledit signal électrique, caractérisée en fournissant audit moyen de pointe (14, 55) un élastomère électriquement conducteur dont la surface de contact avec ladite surface utile (12) augmente comme une fonction de l'augmentation de la force manuelle poussant ledit moyen de pointe (14, 55) sur ladite surface utile et incluant l'étape consistant à fournir un signal électrique au détecteur de signal dont l'amplitude augmente comme une fonction des augmentations sur ladite surface de contact.

7. Méthode telle que revendiquée dans la revendication 6, comprenant en outre les étapes consistant à fournir ladite source de signal comme une source de courant alternatif ayant une fréquence d'entre environ 50-150 KHz.
